# EUROPEAN PATENT SPECIFICATION

(11) **EP 0 779 503 B1**
(45) Date of publication and mention of the grant of the patent: **11.02.2004**
(21) Application number: 96308229.2
(22) Date of filing: 14.11.1996
(51) Int. Cl.: G01J 5/04

(54) **Infrared sensor**
Infrarotsensor
Détecteur infrarouge

(30) Priority: 12.12.1995 JP 32289195
(43) Date of publication of application: 18.06.1997
(73) Proprietor: MURATA MANUFACTURING CO., LTD., Nagaokakyo-shi Kyoto-fu 226 (JP)
(72) Inventor: Narita, Kousuke, Nagaokakyo-shi, Kyoto-fu (JP); Serikawa, Junichi, Nagaokakyo-shi, Kyoto-fu (JP)
(74) Representative: Lloyd, Patrick Alexander Desmond

(56) References cited:
- EP-A- 0 044 110
- DE-U- 9 419 603
- US-A- 4 775 347
- PATENT ABSTRACTS OF JAPAN vol. 013, no. 228 (P-877), 26 May 1989 & JP 01 039528 A (MATSUSHITA ELECTRIC IND CO LTD), 9 February 1989
- PATENT ABSTRACTS OF JAPAN vol. 018, no. 638 (P-1837), 5 December 1994 & JP 06 249709 A (HORIBA LTD), 9 September 1994
- PATENT ABSTRACTS OF JAPAN vol. 018, no. 005 (P-1669), 7 January 1994 & JP 05 248941 A (FUJITSU LTD), 28 September 1993
- PATENT ABSTRACTS OF JAPAN vol. 017, no. 258 (P-1540) 20 May 1993 & JP 05 001 946 A (MURATA MFG CO LTD) 08 January 1993

## Description

The present invention relates to infrared sensors which are used when performing a non-contact type temperature detection and a human body detection, and more particularly, to a technique for gluing and fixing an infrared filter and a window of a case body.

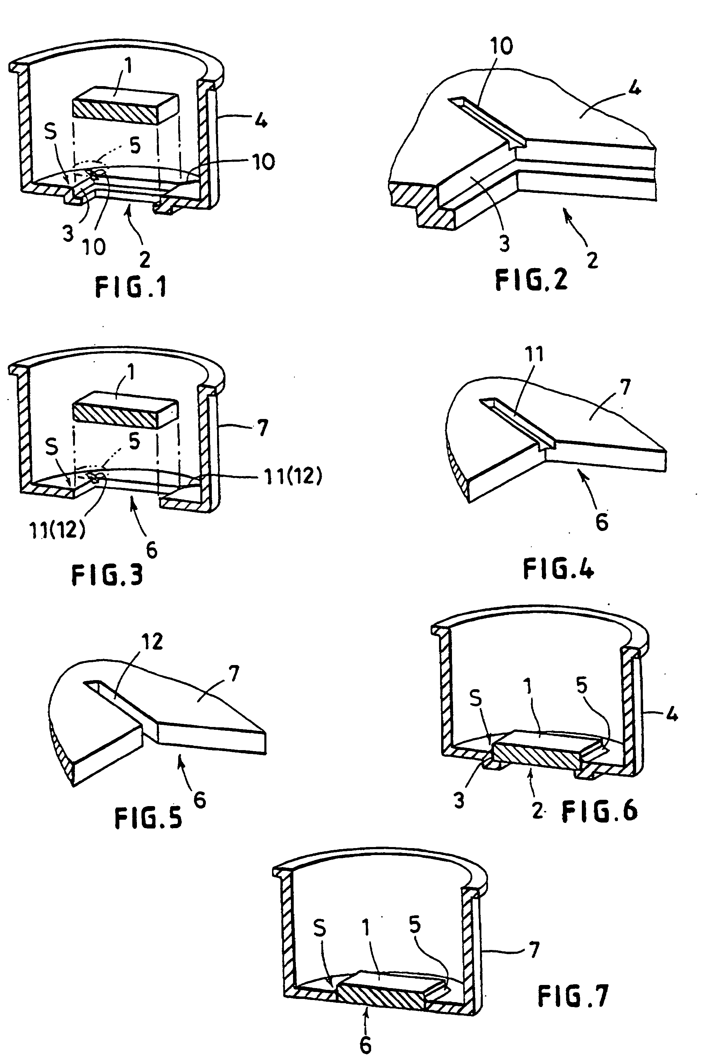

Infrared sensors of this type include one of which only a main part structure is simplified in Fig. 6, and the infrared sensor, which is a first prior art, includes a flat plate-shaped infrared filter 1 having a rectangular shape when viewed in plan, and a case body 4 made of metal in which a window 2 of rectangular shape when viewed in plan for exposing the outer surface of the infrared filter 1 toward the outside is formed through a step portion 3, and sensor elements (not shown) are provided inside thereof. The infrared filter 1 has insulating layers (not shown) adhered to the inner and outer surfaces thereof, and the end face of the infrared filter 1 is glued and fixed to the inside face of the step portion 3 by using a conductive adhesive 5, such as an epoxy-type resin containing carbon.

In addition, other infrared filters include one of which a main part structure is shown in Fig. 7, and an infrared sensor as a second prior art includes an infrared filter 1 similar to the above, and a case body 7 in which a window 6 of a rectangular shape when viewed in plan for accommodating the infrared filter 1 is formed. Further, the infrared filter 1 constituting the infrared sensor is glued and fixed to the end face of the window 6 using the conductive adhesive 5.

It is a matter of course that the rectangular shape of each of the infrared filter 1, the step portion 3 and the window 6 is not exclusive, and a circular shape, etc. may be used.

When gluing and fixing the end face of the infrared filter 1, which constitutes the infrared sensor according to the first and second prior arts, and the inside face of the step portion 3 or the end face of the window 6, the conductive adhesive 5 is directly injected into a space S formed between the inside face and the end face using a known dispenser (not shown), or a low-viscosity conductive adhesive 5 is applied in advance on the inner surface of the case body 4 (7) and then, is poured into the space S utilizing self-fluidity of the conductive adhesive 5. It is common that a high-structure carbon is contained in the epoxy-type resin when preparing the conductive adhesive 5 for use in injection, while a low-structure carbon is contained in the epoxy-type resin when preparing the low-viscosity conductive adhesive 5 for use in pouring.

However, when the conductive adhesive 5 is directly injected to effect gluing and fixing, there occurs the inconvenience that the structure of a gluing device (not shown) becomes complicated and expensive for the reason that it is necessary to secure positional accuracy of the space S with respect to the dispenser. Further, when the position accuracy is insufficient, the conductive adhesive 5 adheres to the surface of the infrared filter 1, thereby causing reduction in sensor function.

On the other hand, when the low-viscosity conductive adhesive is poured to effect the gluing and fixing, there is caused no inconvenience associated with the use of the dispenser. However, the conductive adhesive 5 may not flow into the space S under some operating conditions, resulting in insufficient sealing condition in the infrared sensor. Further, when a large quantity of conductive adhesives 5 is used in order to secure sufficient sealing condition, the conductive adhesive 5 may seep and adhere to the surface of the infrared filter 1, so that the sensor function will be also reduced.

The present invention is made in consideration of these inconveniences, and has its object to provide an infrared sensor which can secure a sufficient sealing condition with pouring of the conductive adhesive while utilizing its self-fluidity, and which has no risk of causing a reduction in sensor function.

The present invention solves these inconveniences with the help of infrared sensors according to independent claims 1-3. Methods for producing the infrared sensors of the present invention are covered by independent claims 4-6.

Embodiments of the present invention will now be described, by way of example, with reference to the accompanying drawings of which:-
Fig. 1 is an exploded sectional view of a main part structure of an infrared sensor according to a first embodiment,
Fig. 2 is an enlarged explanatory view of the main part,
Fig. 3 is an exploded sectional view of a main part structure of an infrared sensor according to a second embodiment,
Fig. 4 is an enlarged explanatory view of the main part,
Fig. 5 is an explanatory view of a modification of the main part,
Fig. 6 is a simplified sectional view of a main part structure of an infrared sensor according to a first prior art, and
Fig. 7 is a sectional view of a main part structure of an infrared sensor according to a second prior art.

In the drawings the following reference numerals are used:-
1 infrared filter
2,6 window
3 step portion
4 case body
5 conductive adhesive
10 concave groove portion
S space

Since overall structures of these infrared sensors are basically the same as those of the prior art, components and portions in Figs. 1 to 5 which are the same as those of shown in Figs. 6 and 7 are indicated by the same references, and detailed description thereof has been omitted.

The infrared sensor according to the first embodiment (Fig. 1) corresponds to a first prior art shown in Fig. 6, and includes a flat plate-shaped infrared filter 1, and a case body 4 made of metal in which a window 2 for exposing the outer surface of the infrared filter 1 toward the outside is formed through a step portion 3, and sensor elements (not shown) are provided inside thereof. The infrared filter 1, the window 2 and the step portion 3 each have a rectangular shape when viewed in plan, and the end face of the infrared filter 1 and the inside face of the step portion 3 are glued and fixed by using a conductive adhesive 5.

As a difference to prior art, on the inner surface of the case body 4 in which the step portion 3 is formed, there are formed concave groove portions 10 which are opened at the inside face of the step portion 3, and these concave groove portions 10 introduce the conductive adhesive 5 composed of an epoxy-type resin containing a low-viscosity conductive adhesive, such as a low-structure carbon, applied on the inner surface of the case body 4, toward a space S sandwiched between the end face of the infrared filter 1 and the inside face of the step portion 3. These concave groove portions 10 are formed at positions corresponding to the corner portions of the step portion 3 in accordance with the fact that the step portion 3 has the rectangular shape similar to the infrared filter 1, and introduces the conductive adhesive 5 toward the corner portions of the end face of the infrared filter 1.

There is no necessity to restrict the number - of the concave groove portions 10, and hence they are not shown in the drawings. In addition, although omitted in the drawings, it is a matter of course that a cross-sectional configuration of each of the concave groove portions 10 may not be the rectangular shape, but be a semi-circular shape and a triangle shape, and the depth of each of the concave groove portions 10 may become deeper as it approaches to the inside face of the step portion 3, which is an opening surface. However, as shown in Figs. 1 and 2, formation of the concave groove portions 10 at positions corresponding to the corner portions of the step portion 3 is the most convenient for process and assembly reasons that the space S formed between the infrared filter 1 and the corner portions of the step portion 3 tends to be most narrowed.

When the structure of the infrared sensor according to this embodiment is adopted, the low-viscosity conductive adhesive 5 applied on the inner surface of the case body 4 selectively flows into the concave groove portions 10, so that the conductive adhesive 5 flowing along each of the concave groove portions 10 reaches an opening section, i.e., the opening section of each of the concave groove portions 10 opened at the inside face of the step portion 3 and moreover, begins to expand toward the end face of the infrared filter 1 while being acted by surface tension. The conductive adhesive 5 comes into contact with the end face of the infrared filter 1 after expansion, and the conductive adhesive 5 which has been contacted the end face of the infrared filter 1 is drawn into the space S sandwiched between the end face of the infrared filter 1 and the inside face of the step portion 3. Consequently, the space S is completely filled with the conductive adhesive 5, which has flown therein, so that the end face of the infrared filter 1 and the inside face of the step portion 3 are completely glued and fixed using the conductive adhesive 5.

Next, an infrared sensor according to a second embodiment of the present invention will now be described.

The infrared sensor according to the second embodiment has a structure corresponding to the second prior art shown in Fig. 7, and includes an infrared filter 1 (Fig. 3) similar to the above, and a case body 7 in which a window 6 having a rectangular shape when viewed in plan for accommodating the infrared filter 1 and exposing its outer surface toward the outside. The end face of the infrared filter 1 and the end face of the window 6 are glued and fixed by using a low-viscosity conductive adhesive 5. In addition, on the inner surface of the case body 4 along the window 6, there are formed concave groove portions 11 which are opened at the end face of the window 6, and these concave groove portions 11 introduce the low-viscosity conductive adhesive 5 applied on the inner surface of the case body 4 toward a space S sandwiched by the end face of the infrared filter 1 and the end face of the window 6.

In the infrared sensor according to this embodiment, the infrared filter 1 and the window 6 each have the rectangular shape when viewed in plan, so that these concave groove portions 11 are formed at positions corresponding to the corners of the window 6 on the inner surface of the case body 4. However, the number, and the cross-sectional configuration of these concave groove portions 11 are not restricted similar to the case of the infrared sensor according to the first embodiment. In this embodiment, although the concave groove portions 11 opened at the end face of the window 6 are formed on the inner surface of the case body 4 along the window 6, it is a matter of course that slit portions 12 (Fig. 5) may be formed instead of these concave groove portions 11, and the slit portions 12 can provide the same actions as those of the concave groove portions 11.

When the structure according to this second embodiment is adopted, the conductive adhesive 5 applied on the inner surface of the case body 4 also selectively flows into the concave groove portions 11 (or slit portions 12), and the conductive adhesive 5, which has reached the opening section of each of the concave groove portions 11 (or slit portions 12), is acted by surface tension so as to be drawn in the space S sandwiched between the end face of the infrared filter 1 and the end face of the window 6. Consequently, the space S is completely filled with the conductive adhesive 5, which has flown therein, so that the end face of the infrared filter 1 and the end face of the window 6 are completely glued and fixed using the conductive adhesive 5.

As described above, in the infrared sensor according to the present invention, the conductive adhesive having self-fluidity selects the concave groove portions or slit portions of the case body and flows therein, and completely fills the space after flowing along the concave groove portions or slit portions. Therefore, a pouring of the conductive adhesive while utilizing its self-fluidity can ensure a sufficient sealing condition of the bonded and fixed infrared filter and the case body, thereby obtaining the advantage that occurrence of inconvenience, such as a reduction in sensor function, can be prevented.

## Claims

1. An infrared sensor including a flat plate-shaped infrared filter (1); and a case body(4) in which a window(2) for exposing the outer surface of said infrared filter(1) toward the outside is formed through a step portion (3); the end face of said infrared filter(1) and the inside face of said step portion (3) are glued and sealed, **characterised in that**
concave groove portions (10) opened at the inside face of said step portion (3) are formed on the inner surface of said case body (4) in which said step portion (3) is formed; wherein said infrared filter (1) and said step portion (3) each have a rectangular shape when viewed in plan; wherein said concave groove portions (10) are formed at positions corresponding to corner portions of said step portion (3); and wherein said concave groove portions (10) represent means for introducing a low-viscosity conductive adhesive applied on the inner surface of said case body (4) under self-fluidity toward a space sandwiched between the end face of said infrared filter (1) and the inside face of said step portion (3) such that the end face of said infrared filter (1) and the inside face of said step portion (3) are glued and sealed.

2. An infrared sensor including a flat plate-shaped infrared filter (1); and a case body (7) in which a window (6) for accommodating said infrared filter (1) is formed, the end face of said infrared filter (1) and the end face of said window (6) are glued and sealed, **characterised in that**
concave groove portions (11) opened at the end face of said window (6) are formed on the inner surface of said case body (7) along the end face of said window (6); wherein said infrared filter (1) and said window (6) each has a rectangular shape when viewed in plan; wherein said concave groove portions (11) are formed at positions corresponding to corner portions of said window (6); and wherein said concave groove portions (11) represent means for introducing a low-viscosity conductive adhesive applied on the inner surface of said case body (7) under self-fluidity toward a space sandwiched between the end face of said infrared filter (1) and the end face of said window (6), such that the end face of said infrared filter (1) and the end face of said window (6) are glued and sealed.

3. An infrared sensor including a flat plate-shaped infrared filter (1); and a case body (7) in which a window (6) for accommodating said infrared filter (1) is formed, the end face of said infrared filter (1) and the end face of said window (6) are glued and sealed, **characterised in that**
slit portions (12) opened at the end face of said window (6) are formed at predetermined positions of said case body (7) along the end face of said window (6); wherein said infrared filter (1) and said window (6) each has a rectangular shape when viewed in plan; wherein said slit portions (12) are formed at positions corresponding to corner portions of said window (6); and wherein said slit portions (12) represent means for introducing a low-viscosity conductive adhesive applied on the inner surface of said case body (7) under self-fluidity toward a space sandwiched between the end face of said infrared filter (1) and the end face of said window (6), such that the end face of said infrared filter (1) and the end face of said window (6) are glued and sealed.

4. A method of gluing and sealing a plate-like infrared filter (1) into a rectangular window (2) formed through a rectangular step portion (3) of a case body (4) of an infrared sensor, comprising;
applying a low-viscosity conductive adhesive (5) to the case body (4); and
gluing and sealing the end face of said infrared filter (1) and the inside face of said step portion (3);
**characterised in that**
the low-viscosity conductive adhesive is applied to concave groove portions (10) formed at positions corresponding to the corner positions of said step portion (3) such that the low-viscosity conductive adhesive (5) flows under self-fluidity into a space sandwiched between the end face of said infrared filter (1) and the inside face of said step portion (3).

5. A method of gluing and sealing a plate-like infrared filter (1) into a rectangular window (2) of a case body (4) of an infrared sensor, comprising;
applying a low-viscosity conductive adhesive (5) to the case body (4); and
gluing and sealing the end face of said infrared filter (1) and the inside face of said window (2)
**characterised in that**
the low-viscosity conductive adhesive is applied to concave groove portions (10) formed at positions corresponding to the corner positions of said window (2) such that the low-viscosity conductive adhesive (5) flows under self-fluidity into a space sandwiched between the end face of said infrared filter (1) and the inside face of said window (2).

6. A method of gluing and sealing a plate-like infrared filter (1) into a rectangular window (2) of a case body (4) of an infrared sensor, comprising;
applying a low-viscosity conductive adhesive (5) to the case body (4); and
gluing and sealing the end face of said infrared filter (1) and the inside face of said window (2);
**characterised in that**
the low-viscosity conductive adhesive is applied to slit portions (12) formed at positions corresponding to the corner positions of said window (2) such that the low-viscosity conductive adhesive (5) flows under self-fluidity into a space sandwiched between the end face of said infrared filter (1) and the inside face of said window (2).

## Patentansprüche

1. Infrarotsensor mit einem flachen plattenförmigen Infrarotfilter (1) und einem Gehäusekörper (4), in dem durch einen Stufenteil (3) ein Fenster (2) zum Freilegen der Außenseite des genannten Infrarotfilters (1) nach außen geformt ist; wobei die Endseite des genannten Infrarotfilters (1) und die Innenseite des genannten Stufenteils (3) geklebt und abgedichtet sind; **dadurch gekennzeichnet, dass** an der Innenfläche des genannten Gehäusekörpers (4), in der der genannte Stufenteil (3) geformt ist, konkave Nutenteile (10) gebildet sind, die an der Innenseite des genannten Stufenteils (3) geöffnet sind; wobei der genannte Infrarotfilter (1) und der genannte Stufenteil (3) in Draufsicht jeweils eine rechteckige Form haben, wobei die genannten konkaven Nutenteile (10) an Positionen gebildet sind, die Eckpositionen des genannten Stufenteils (3) entsprechen, und wobei die genannten konkaven Nutenteile (10) Mittel zum Einführen eines auf die Innenfläche des genannten Gehäusekörpers (4) aufgetragenen niedrigviskosen leitfähigen Klebstoffs unter Selbstfluidität in Richtung auf einen zwischen der Endseite des genannten Infrarotfilters (1) und der Innenseite des genannten Stufenteils (3) befindlichen Zwischenraum darstellen, sodass die Endseite des genannten Infrarotfilters (1) und die Innenseite des genannten Stufenteils (3) geklebt und abgedichtet werden.

2. Infrarotsensor mit einem flachen plattenförmigen Infrarotfilter (1) und einem Gehäusekörper (7), in dem sich ein Fenster (6) zum Unterbringen des genannten Infrarotfilters (1) befindet, wobei die Endseite des genannten Infrarotfilters (1) und die Endseite des genannten Fensters (6) geklebt und abgedichtet sind, **dadurch gekennzeichnet, dass** an der Innenfläche des genannten Gehäusekörpers (7) entlang der Endseite des genannten Fensters (6) konkave Nutenteile (11) gebildet sind, die an der Endseite des genannten Fensters (6) geöffnet sind, wobei der genannte Infrarotfilter (1) und das genannte Fenster (6) in Draufsicht jeweils eine rechteckige Form haben, wobei die genannten konkaven Nutenteile (11) an Positionen gebildet sind, die Eckpositionen des genannten Fensters (6) entsprechen, und wobei die genannten konkaven Nutenteile (11) Mittel zum Einführen eines auf die Innenfläche des genannten Gehäusekörpers (7) aufgetragenen niedrigviskosen leitfähigen Klebstoffs unter Selbstfluidität in Richtung auf einen zwischen der Endseite des genannten Infrarotfilters (1) und der Endseite des genannten Fensters (6) befindlichen Zwischenraum darstellen, sodass die Endseite des genannten Infrarotfilters (1) und die Endseite des genannten Fensters (6) geklebt und abgedichtet werden.

3. Infrarotsensor mit einem flachen plattenförmigen Infrarotfilter (1) und einem Gehäusekörper (7), in dem sich ein Fenster (6) zum Unterbringen des genannten Infrarotfilters (1) befindet, wobei die Endseite des genannten Infrarotfilters (1) und die Endseite des genannten Fensters (6) geklebt und abgedichtet sind, **dadurch gekennzeichnet, dass** an vorbestimmten Stellen des genannten Gehäusekörpers (7) entlang der Endseite des genannten Fensters (6) Schlitzteile (12) gebildet sind, die an der Endseite des genannten Fensters (7) geöffnet sind, wobei der genannte Infrarotfilter (1) und das genannte Fenster (6) in Draufsicht jeweils eine rechteckige Form haben, wobei die genannten Schlitzteile (12) an Positionen gebildet sind, die Eckpositionen des genannten Fensters (6) entsprechen, und wobei die genannten Schlitzteile (12) Mittel zum Einführen eines auf die Innenfläche des genannten Gehäusekörpers (7) aufgetragenen niedrigviskosen leitfähigen Klebstoffs unter Selbstfluidität in Richtung auf einen zwischen der Endseite des genannten Infrarotfilters (1) und der Endseite des genannten Fensters (6) befindlichen Zwischenraum darstellen, sodass die Endseite des genannten Infrarotfilters (1) und die Endseite des genannten Fensters (6) geklebt und abgedichtet werden.

4. Verfahren zum Einkleben und Abdichten eines plattenartigen Infrarotfilters (1) in ein rechteckiges Fenster (2), das durch ein rechteckiges Stufenteil (3) eines Gehäusekörpers (4) eines Infrarotsensors geformt ist, umfassend:
Auftragen eines niedrigviskosen leitfähigen Klebstoffs (5) auf den Gehäusekörper (4) und
Kleben und Abdichten der Endseite des genannten Infrarotfilters (1) und der Innenseite des genannten Stufenteils (3),
**dadurch gekennzeichnet, dass** der niedrigviskose leitfähige Klebstoff an konkaven Rillenteile (10) aufgetragen wird, die an Positionen gebildet sind, die den Eckpositionen des genannten Stufenteils (3) entsprechen, sodass der niedrigviskose leitfähige Klebstoff (5) unter Selbstfluidität in einen Zwischenraum fließt, der sich zwischen der Endseite des genannten Infrarotfilters (1) und der Innenseite des genannten Stufenteils (3) befindet.

5. Verfahren zum Einkleben und Abdichten eines plattenartigen Infrarotfilters (1) in ein rechteckiges Fenster (2) eines Gehäusekörpers (4) eines Infrarotsensors, umfassend:
Auftragen eines niedrigviskosen leitfähigen Klebstoffs (5) auf den Gehäusekörper (4) und
Kleben und Abdichten der Endseite des genannten Infrarotfilters (1) und der Innenseite des genannten Fensters (2),
**dadurch gekennzeichnet, dass** der niedrigviskose leitfähige Klebstoff an konkaven Rillenteile (10) aufgetragen wird, die an Positionen gebildet sind, die den Eckpositionen des genannten Fensters (2) entsprechen, sodass der niedrigviskose leitfähige Klebstoff (5) unter Selbstfluidität in einen Zwischenraum fließt, der sich zwischen der Endseite des genannten Infrarotfilters (1) und der Innenseite des genannten Fensters (2) befindet.

6. Verfahren zum Einkleben und Abdichten eines plattenartigen Infrarotfilters (1) in ein rechteckiges Fenster (2) eines Gehäusekörpers (4) eines Infrarotsensors, umfassend:
Auftragen eines niedrigviskosen leitfähigen Klebstoffs (5) auf den Gehäusekörper (4) und
Kleben und Abdichten der Endseite des genannten Infrarotfilters (1) und der Innenseite des genannten Fensters (2) ,
**dadurch gekennzeichnet, dass** der niedrigviskose leitfähige Klebstoff an Schlitzteilen (12) aufgetragen wird, die an Positionen gebildet sind, die den Eckpositionen des genannten Fensters (2) entsprechen, sodass der niedrigviskose leitfähige Klebstoff (5) unter Selbstfluidität in einen Zwischenraum fließt, der sich zwischen der Endseite des genannten Infrarotfilters (1) und der Innenseite des genannten Fensters (2) befindet.

## Revendications

1. Capteur infra-rouge comportant un filtre infra-rouge en forme de plaque plate (1) ; et un corps de boîtier (4) dans lequel une fenêtre (2) pour exposer la surface externe dudit filtre infra-rouge (1) vers l'extérieur est formée à travers une partie en gradin (3) ; la face d'extrémité dudit filtre infra-rouge (1) et la face interne de ladite partie en gradin (3) sont collées et scellées, **caractérisé en ce que**
des parties de rainures concaves (10) ouvertes au niveau de la face interne de ladite partie en gradin (3) sont formées sur la surface interne dudit corps de boîtier (4) dans lequel ladite partie en gradin (3) est formée ; dans lequel ledit filtre infra-rouge (1) et ladite partie en gradin (3) ont chacun une forme rectangulaire selon une vue en plan ; dans lequel lesdites parties de rainures concaves (10) sont formées au niveau de positions correspondant à des parties d'angles de ladite partie en gradin (3) ; et dans lequel lesdites parties de rainures concaves (10) représentent un moyen pour introduire un adhésif conducteur de faible viscosité appliqué sur la surface interne dudit corps de boîtier (4) en état d'auto-fluidité vers un espace pris en sandwich entre la face d'extrémité dudit filtre infra-rouge (1) et la face interne de ladite partie en gradin (3) de telle sorte que la face d'extrémité dudit filtre infra-rouge (1) et la face interne de ladite partie en gradin (3) soient collées et scellées.

2. Capteur infra-rouge comportant un filtre infra-rouge en forme de plaque plate (1) ; et un corps de boîtier (7) dans lequel une fenêtre (6) pour accepter ledit filtre infra-rouge (1) est formée, la face d'extrémité dudit filtre infra-rouge (1) et la face d'extrémité de ladite fenêtre (6) sont collées et scellées, **caractérisé en ce que**
des parties de rainures concaves (11) ouvertes au niveau de la face d'extrémité de ladite fenêtre (6) sont formées sur la surface interne dudit corps de boîtier (4) le long de la face d'extrémité de ladite fenêtre (6) ; dans lequel ledit filtre infra-rouge (1) et ladite fenêtre (6) ont chacun une force rectangulaire selon une vue en plan ; dans lequel lesdites parties de rainures concaves (11) sont formées au niveau de positions correspondant à des parties d'angles de ladite fenêtre (6) ; et dans lequel lesdites parties de rainures concaves (11) représentent un moyen pour introduire un adhésif conducteur de faible viscosité appliqué sur la surface interne dudit corps de boîtier (7) en état d'auto-fluidité vers un espace pris en sandwich entre la face d'extrémité dudit filtre infra-rouge (1) et la face d'extrémité de ladite fenêtre (6), de telle sorte que la face d'extrémité dudit filtre infra-rouge (1) et la face d'extrémité de ladite fenêtre (6) soient collées et scellées.

3. Capteur infra-rouge comportant un filtre infra-rouge en forme de plaque plate (1) ; et un corps de boîtier (7) dans lequel une fenêtre (6) pour accepter ledit filtre infra-rouge (1) est formée, la face d'extrémité dudit filtre infra-rouge (1) et la face d'extrémité de ladite fenêtre (6) sont collées et scellées, **caractérisé en ce que**
des parties fendues (12) ouvertes au niveau de la face d'extrémité de ladite fenêtre (6) sont formées au niveau de positions prédéterminées dudit corps de boîtier (7) le long de la face d'extrémité de ladite fenêtre (6) ; dans lequel ledit filtre infra-rouge (1) et ladite fenêtre (6) ont chacun une force rectangulaire selon une vue en plan ; dans lequel lesdites parties fendues (12) sont formées au niveau de positions correspondant à des parties d'angles de ladite fenêtre (6) ; et dans lequel lesdites parties fendues (12) représentent un moyen pour introduire un adhésif conducteur de faible viscosité appliqué sur la surface interne dudit corps de boîtier (7) en état d'auto-fluidité vers un espace pris en sandwich entre la face d'extrémité dudit filtre infra-rouge (1) et la face d'extrémité de ladite fenêtre (6), de telle sorte que la face d'extrémité dudit filtre infra-rouge (1) et la face d'extrémité de ladite fenêtre (6) soient collées et scellées.

4. Procédé de collage et de scellement d'un filtre infra-rouge en forme de plaque (1) dans une fenêtre rectangulaire (2) formée à travers une partie en gradin rectangulaire (3) d'un corps de boîtier (4) d'un capteur infra-rouge, comprenant :
l'application d'un adhésif conducteur de faible viscosité (5) sur le corps de boîtier (4) ; et
le collage et le scellement de la face d'extrémité dudit filtre infra-rouge (1) et de la face interne de ladite partie en gradin (3) ; **caractérisé en ce que**
l'adhésif conducteur de faible viscosité est appliqué sur des parties de rainures concaves (10) formées au niveau de positions correspondant aux positions d'angles de ladite partie en gradin (3) de telle sorte que l'adhésif conducteur de faible viscosité (5) s'écoule dans un état d'auto-fluidité dans un espace pris en sandwich entre la face d'extrémité dudit filtre infra-rouge (1) et la face interne de ladite partie en gradin (3).

5. Procédé de collage et de scellement d'un filtre infra-rouge en forme de plaque (1) dans une fenêtre rectangulaire (2) d'un corps de boîtier (4) d'un capteur infra-rouge, comprenant :
l'application d'un adhésif conducteur de faible viscosité (5) sur le corps de boîtier (4) ; et
le collage et le scellement de la face d'extrémité dudit filtre infra-rouge (1) et de la face interne de ladite fenêtre (2) ; **caractérisé en ce que**
l'adhésif conducteur de faible viscosité est appliqué sur des parties de rainures concaves (10) formées au niveau de positions correspondant aux positions d'angles de ladite fenêtre (2) de telle sorte que l'adhésif conducteur de faible viscosité (5) s'écoule dans un état d'auto-fluidité dans un espace pris en sandwich entre la face d'extrémité dudit filtre infra-rouge (1) et la face interne de ladite fenêtre (2).

6. Procédé de collage et de scellement d'un filtre infra-rouge en forme de plaque (1) dans une fenêtre rectangulaire (2) d'un corps de boîtier (4) d'un capteur infra-rouge, comprenant :
l'application d'un adhésif conducteur de faible viscosité (5) sur le corps de boîtier (4) ; et
le collage et le scellement de la face d'extrémité dudit filtre infra-rouge (1) et de la face interne de ladite fenêtre (2) ; **caractérisé en ce que**
l'adhésif conducteur de faible viscosité est appliqué sur des parties fendues (12) formées au niveau de positions correspondant aux positions d'angles de ladite fenêtre (2) de telle sorte que l'adhésif conducteur de faible viscosité (5) s'écoule dans un état d'auto-fluidité dans un espace pris en sandwich entre la face d'extrémité dudit filtre infra-rouge (1) et la face interne de ladite fenêtre (2).
